# EUROPEAN PATENT APPLICATION

(11) **EP 0 652 626 A1**
(43) Date of publication of application: **10.05.1995**
(21) Application number: 94308249.5
(22) Date of filing: 09.11.1994
(51) Int. Cl.: H02K 7/108, H02J 7/14

(54) **An electrical generator assembly**

(30) Priority: 09.11.1993 GB 9323070
(71) Applicant: Rees, Lyndon Geoffrey, Swansea, West Glamorgan SA2 2QE (GB)
(72) Inventor: Rees, Lyndon Geoffrey, Swansea, West Glamorgan SA2 2QE (GB)
(74) Representative: Gibson, Stewart Harry

(57) **Abstract**

An electrical generator assembly for a vehicle comprises an alternator having a rotary shaft (10) driven by the vehicle's internal combustion engine. An electrically-operated clutch assembly (15) disconnects rotary drive to the alternator when a sensor senses that the vehicle's throttle is at or near to full-throttle position, so as to increase the power available to the vehicle's transmission.

## Description

This invention relates to an electrical generator assembly, and more particularly to an electrical generator assembly for a vehicle.

Vehicles generally comprise an alternator driven by a V-belt from the engine, which generates electricity when the engine is running. These alternators consume only a small proportion of the engines output power i.e. 1½ - 2 hp, however in small engined vehicles and in racing vehicles this power consumption can be significant.

We have now devised an electrical generator assembly which alleviates the above-mentioned problem.

In accordance with this invention there is provided an electrical generator assembly comprising a rotary electrical generator device and a transducer for sensing an operating parameter of an element connected to the generator device, and disabling means for disabling an output current from the generator device within a range of said operating parameter.

It is well known that the force or power required to rotate the armature of a rotary electrical generator device is directly proportional to the current and voltage generated, therefore the force or power can be reduced to disabling the output current from the device.

In one embodiment the disabling means for disabling the output current may comprise a mechanical linkage which disengages the rotary drive to the generator device within said range so that no current is generated.

Preferably the mechanical linkage comprises a clutch coupled to a rotary input shaft of the device and operated by electrical signals from said transducer.

In an alternative embodiment the disabling means comprises a switch which open-circuits the generator device within said range of the operating parameter.

The switch may be connected in series with the electrical output from the generator device. Preferably the switch is connected in series with an electrical winding of the generator device.

In the case of vehicle alternators, the transducer may be arranged to inhibit the magnetic field excitation current of the alternator at times when maximum engine power is required e.g. when accelerating or when at or near to full throttle. Thus the transducer may comprise an accelerometer, or a sensor coupled to the throttle or to a rotational shaft of the engine.

Alternatively the transducer may monitor the state of charge of the vehicle's battery so as to enable the generator device only at times when its state of charge falls below a predetermined level.

Embodiments of this invention will now be described by way of examples only and with reference to the accompanying drawings, in which;
FIGURE 1 is a sectional view through an embodiment of vehicle alternator in accordance with this invention; and
FIGURE 2 is a schematic diagram of an alternative embodiment of vehicle alternator in accordance with this invention.

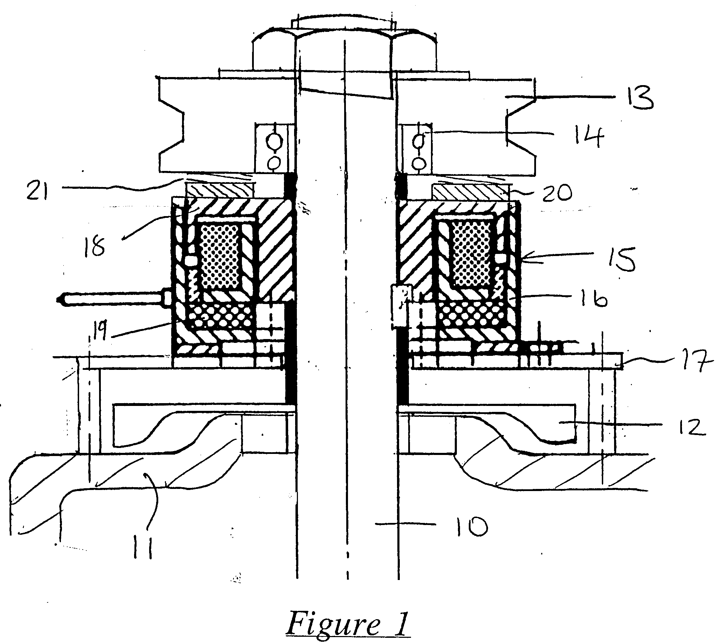

Referring to Figure 1 of the drawings, there is shown a vehicle alternator comprising a shaft 10 rotatably mounted to a body 11. The shaft 10 carries armature windings (not shown) which rotate inside stator windings (not shown) disposed around the inside of the body 10. A fan 12 mounted to the shaft 10 directs cooling air around the alternator windings.

A V-belt pulley 13 is rotatably mounted to the axially outer end of the shaft 10 by a bearing 14. An annular electromagnetic clutch assembly 15 is disposed around the shaft 10 between the pulley 13 and the end wall of the body 11. The clutch assembly 15 comprises an outer casing 16 attached to the body 11 of the alternator by a support 17 which extends around the fan 12. The axially outer end wall 18 of the clutch assembly is rotatable and is keyed to the shaft 10. An electromagnet 19 is disposed inside the casing of the clutch assembly 15. The axially inner surface of the V-belt pulley 13 comprises a magnetic annular friction plate 20 attached to the pulley by means of springs 21.

In use, when power is applied to the electromagnet 19, the magnetic force produced pulls the friction plate 20 into face-to-face contact with the end wall 18 of the clutch assembly, thereby engaging the pulley 13 with the shaft 10. When power is removed from the electromagnet 19, the springs 21 pull the plate 20 away from the end wall 18, thereby disengaging the pulley 13 from the shaft 10. The electromagnet may be operated by a switch connected to the vehicle's throttle, so that power is removed from the electromagnet at near or full throttle positions, to increase the power to the vehicle's transmission. In an alternative embodiment, the electromagnet is arranged to disengage the clutch when power is removed from its windings. It will be appreciated that a similar arrangement may be used in a dynamo.

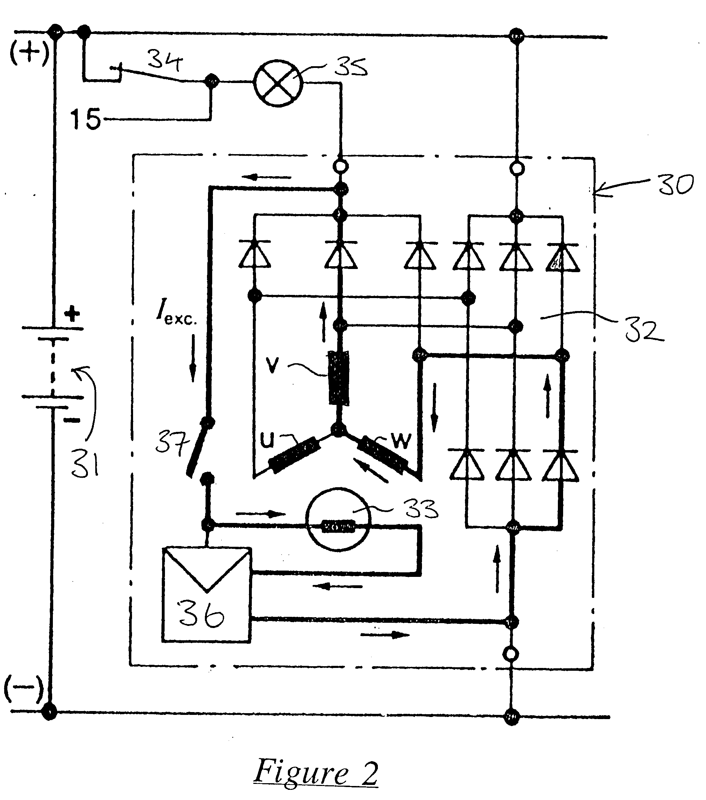

Referring to Figure 2, there is shown an alternative embodiment of vehicle alternator. The alternator 30 is connected across the +/- supply terminals of a battery 31. The rotatable armature comprises windings U,V,W, the output from each winding being connected to a diode bridge 32. The stator windings 33 are connected in series with an ignition switch 34 and generator warning lamp 35 across the battery. A voltage regulator 36 is also connected in series with the stator windings 33 so as to stabilise the voltage and current generated by the alternator across a range of operating speeds. This is achieved by regulating the DC excitation current I_{exc} flowing through the stator windings 33. Since the force applied to rotate the armature is proportional to the current and voltage produced, the rotating force can be reduced by opening a switch 37 connected in series with the stator windings 33, so as to inhibit the excitation current I_{exc}. The switch 37 may be connected to the vehicle's throttle, to inhibit the excitation current I_{exc} when the engine is at or near full throttle position.

## Claims

**1)** An electrical generator assembly comprising a rotary electrical generator device and a transducer for sensing an operating parameter of an element connected to the device, and disabling means for disabling an output current from the generator device within a range of said operating parameter.

**2)** An electrical generator assembly as claimed in claim 1, in which the disabling means comprises a mechanical linkage which disengages a rotary drive to the generator device within said range of the operating parameter.

**3)** An electrical generator assembly as claimed in claims 1 or 2, in which the mechanical linkage comprises a clutch coupled to a rotary input shaft of the device, and operated by electrical signals from said transducer.

**4)** An electrical generator assembly as claimed in claims 1 or 2, in which the disabling means comprises a switch which open-circuits the generator device within said range of the operating parameter.

**5)** An electrical generator assembly as claimed in claim 4, in which the switch is connected in series with an electrical output from the generator device.

**6)** An electrical generator assembly as claimed in claim 4, in which the switch is connected in series with an electrical winding of the generator device.

**7)** An electrical generator assembly as claimed in claim 6, in which the generator device comprises an alternator, the switch being connected in series with a stator winding of the alternator.

**8)** An electrical generator assembly as claimed in any preceding claim, in which the transducer comprises an accelerometer.

**9)** An electrical generator assembly as claimed in any preceding claim, in which the transducer comprises a sensor for coupling to the throttle of an internal combustion engine.

**10)** An electrical generator assembly as claimed in any preceding claim, in which the transducer comprises a sensor for coupling to a rotational shaft of an internal combustion engine.

**11)** An electrical generator assembly as claimed in any preceding claim, in which the transducer is arranged to monitor the state of charge of a battery which is charged by said generator device.
